# EUROPEAN PATENT APPLICATION

(11) **EP 0 529 326 A1**
(43) Date of publication of application: **03.03.1993**
(21) Application number: 92112823.7
(22) Date of filing: 28.07.1992
(51) Int. Cl.: D21C 9/16

(54) **Process for the degradation of lignin by means of dioxiranes**

(30) Priority: 28.08.1991 IT MI912305
(71) Applicant: AUSIMONT S.p.A., I-20121 Milano (IT)
(72) Inventor: Wlassics, Ivan, Dr., I-16035 Rapallo, Genova (IT); Burzio, Fulvio, I-20145 Milano (IT); Curci, Ruggero, I-70016 Noicattaro, Bari (IT)
(74) Representative: Sama, Daniele, Dr.

(57) **Abstract**

A lignin substrate, consisting of lignin or one of its derivatives, is degraded by means of a treatment in an aqueous medium with a dioxyrane of the following formula: 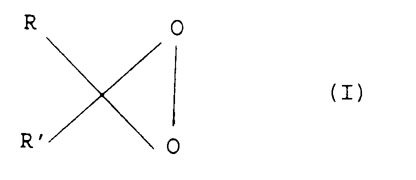
wherein each of R and R' denote a lower alkyl or aryl group, which can optionally be fluoro-substituted.

## Description

### Background of the invention:

This invention relates to a process for the degradation of lignin by employing oxidizing agents.

In particular, this invention relates to a process for the degradation of lignin contained in the cellulose fibres of wood, which is depolymerized to a more soluble form easily separable from the cellulose fibres ("pulp") by using dioxirane oxidants.

Even move in particular, the invention relates to a process for the degradation of lignin, a binder of the cellulose fibres of wood, by means of dioxiranes prepared in situ.

The process of the invention can be utilized, for instance, in the processing of wood for the production of paper and similar products (cardboards, etc.). It is, therefore, an industrial applicative field of great importance, the interest of which need not to be illustrated.

As known, paper and similar products derive from the processing of wood. Wooden plants are made of elongate cells having thick walls which are the cause of the fibrous nature of wood.

The walls of said cells are made of a complex mixture of polymers with variable compositions, that can be substantially grouped as 70% of polysaccharids and about 30% of lignin.

Polysaccharids of wood are named "total cellulose" and are divided in:
(a) cellulose (40%), a polymer of high molecular weight made of highly resistant glucosydic units, and
(b) hemicellulose (30%), made of other polysaccharids having molecular weight lower than that of cellulose and endowed with a lower resistance to acids and bases; the principal sugars of hemicellulose are xylose, galattose, arabinose, mannose and glucose.

Lignin is a polymeric compound of high molecular weight which acts as a connective material linking fibres one to the other, thus giving the typical wooden consistency to trunks. Lignin substantially consists of phenylpropane units bound one to the other by ethereal or carbon-carbon bonds, while about 50% of the bonds are between beta-aryl ethers units.

In the industrial production of paper, cellulose fibres are separated from the connective material consisting of the lignin.

The above step is usually named "delignification" of wood and substantially consists of a solubilization of lignin.

According to the known technique, lignin is degraded with highly alkaline substances or with an acid solution of bisulphite, and than it is removed from wood separating it from the cellulose fibres ("pulp").

The processes for the preparation of the above "pulp" lower the molecular weight of emicellulose, depolymerize lignin and rise the % of cellulose fibres obtained, rendering also lignin more soluble ("lignin" means all the material, which is insoluble in a 72% H₂SO₄ solution), so that cellulose fibres can be separated.

At present, the methods utilized for the degradation of lignin are the following: (1) "kraft" process, (2) process with the bisulphite in acid conditions, and (3) process with the bisulphite in neutral conditions.

All of the above processes are based on the sulphonation of lignin by means of bisulphites and sulphides.

As known, a common aspect of the above methods is the great environmental problem due both to the production of aqueous sulphides in the waste waters, which are highly polluting and difficult to be treated, and to the emission in the atmosphere of harmful and/or bad-smelling volatile substances, such as SO₂, methylmercaptane, dimethylsulphides, etc.

In addition, further drawbacks are due to the high costs for recycling the chemical reagents utilized.

Therefore, an object of the present invention is to provide a process for the degradation of lignin which is simple, economical and free from the above discussed drawbacks of the known technique.

Another object of the present invention is to provide a process for the degradation of the lignin in the production of paper.

### Summary of the invention:

These and still other objects, which will be clearly apparent to those skilled in the art from the following description, are achieved, according to the present invention, by a process for the degradation of lignin, wherein lignin or a derivative thereof, is treated in an aqueous medium with at least a dioxirane of the following formula: 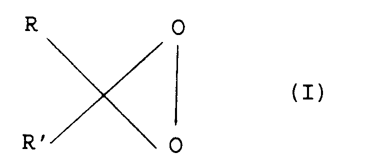
wherein each of R and R' are lower alkyl or aryl groups optionally fluoro-substituted.

Lower alkyls are C₁-C₅ alkyl groups; preferably, the aryl group is a phenyl.

### Detailed description of the invention:

More explicitly, the process of the present invention consists in the degradation of polymeric lignin or of a derivative (hereniafter also referred to as "lignin substrate") which are present in wooden materials, by treatment with at least a dioxirane of formula (I). Lignin is thus broken up in monomeric (or oligomeric) fragments, easily separable from the pulp of the cellulose fibres.

The process of the present invention can be applied, in addition to lignin as such contained in wooden materials, also to lignin derivatives such as those deriving from the partial degradation/solubilization of lignin, however obtained.

In particular, the process of the present invention can be applied to sulphonated lignin coming from a conventional process for the treatment of wood for paper, such as a "kraft" digestion process with bisulphite, etc.

Therefore, the process can also be applied to the treatment of waste waters containing lignin derivatives in a process for the production of paper.

When lignin as such is treated, the wooden material, of course is dimensionally reduced by means of any pre-crushing system such as grinding, etc., in order to reduce the time of reaction and solubilization with the dioxyrane of formula (I).

A dioxirane of formula (I) alone or, as an alternative, a mixture of two or more dioxiranes of formula (I) may be employed.

Examples of suitable dioxiranes are dimethyl-dioxirane (R=R'=CH₃), methyl-trifluoromethyl-dioxirane (R=CH₃, R'=CF₃) and the methyl-phenyl-dioxirane (R=CH₃, R'=phenyl).

As known, the dioxiranes are a per se known class of compound, obtainable by means of known techniques. For instance, the dioxiranes can be obtained from the reaction of the corresponding ketone with potassium dipersulphate or potassium caroate.

In the process of the invention, the dioxirane passes to the corresponding ketone, which can be then recycled.

Nevertless, according to an effective embodiment, dioxiranes are prepared in situ starting from the corresponding ketone and from potassium caroate. The latter constitutes the only external chemical contribution.

When acetone is employed, the cycle is: 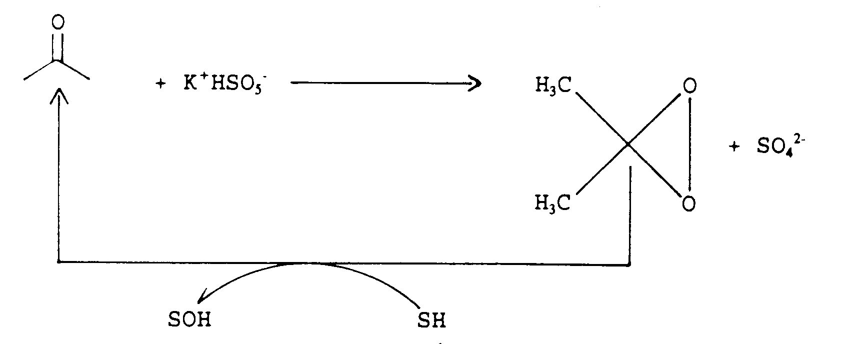
wherein SH stands for the lignin in the initial reduced form and SOH stands for the oxidized and degraded form.

The addition of the potassium caroate is preferably performed gradually, in order to keep the pH within substantially neutral values.

The operative conditions are not particularly critical. Therefore, the process is performed under room temperature and pressure conditions and at substantially neutral pH values.

It can be advantageous to work in the presence of a certain excess of the reactants.

However, operative satisfying results, even from the economical point of view, are obtained under the following conditions.

The reaction temperature ranges from 4°C to 25°C, preferably it is about 15°C when working at atmospheric pressure.

As above indicated, the pH is kept at a substantially neutral value, ranging from about 6.5 to 7.5, for instance by employing a buffer system such as NaHCO₃ 0.05-0.2M, preferably 0.1M.

Reaction times ranging from 4 to 10 hours are suitable; usually, good results are achieved with reaction times ranging from about 6 to 8 hours.

As regards the weight ratio caroate:lignin substrate, it may range from 1:1 to 50:1, preferably from 2:1 to 15:1. The weight ratio ketone:lignin substrate may range from 1:1 to 10:1, preferably from 1:1 to 7:1.

The ratio (dioxirane moles):(lignin substrate grams) suitably ranges from 1:1 to 6:1, for instance it is 2:1 in the case of dimethyl-dioxirane, and 1.7:1 in the case of methyl-trifluoromethyl-dioxirane.

According to a suitable embodiment, the process object of the present invention is carried out as follows.

Into a stainless reactor, equipped with stirrer, thermometer, thermostat and pH-meter, the lignin substrate, the ketone (acetone) and a buffer solution are introduced under agitation. Then KHSO₅ (triple salt KHSO₅+KHSO₄+K₂SO₄) is gradually added at a pH value of 7-7.5 (optionally adding KOH). The system is allowed to react for a time of about 8 hours. Then, after filtering, a clear solution is obtained.

The process object of the invention shows the following advantages:
1. Ecologicity: the by-products of the process object of the invention are only ketone (acetone) which is biodegradable and optionally recyclable, and potassium sulphate which is a non-toxic compound.
   Moreover, as stated above, the process do not produce polluted waste waters and bad-smelling volatile substances.
   Finally, lignin fragmentation at a monomeric level helps and favours the biodegradability of the final liquids.
2. Semplicity: the process object of the invention does not require complex plants, such as for instance the complex redox system of the "kraft" process.
   Moreover, the process is carried out in a single reactor and does not require repeated manipulations, such as for instance filterings or evaporations which are necessary in the "kraft" process.

The process object of the invention will be illustrated in the following examples, which are given for purely illustrative and not limiting purposes.

### EXAMPLE 1

10 Kg of poplar wood were finely triturated. The triturated wood was treated according to the "kraft" method (bisulphite in alkaline conditions). 100 ml of the sulphonated lignin solution (about 15 g of sulphonated lignin) obtained from the "kraft" treatment were put into a 2 liters pirex reactor having a jacket in which ethylene glycol thermostated at 4°C was circulating.

The reactor was equipped with a mechanic stirrer, a dropper containing a 30% KOH solution, an electrode connected to a pH-meter and a dispenser of potassium caroate (commercial product of Degussa) in the form of triple salt consisting of KHSO₅ (45%), KHSO₄ (27.5%) e K₂SO₄ (27.5%), which was fed (150 g of caroate as KHSO₅) in a weigh ratio of 10:1 with respect to the sulphonated lignin to the reactor containing 72 g (2.0 M) of acetone, in a weight ratio acetone:lignin of 5:1.

The solution was buffered with NaHCO₃ 0.1 M. The reaction temperature was maintained at 10°C. pH was controlled by the pHmeter and maintained at 7.0 by dropping the 30% KOH solution whenever pH deviated from neutrality. The reaction was continued for 8 hours, then the dark brown reaction mixture turned orange and clear. The mixture was filtered in order to separate the liquid phase from potassium sulphates.

In order to prove that the oxidation reaction of sulphonated lignin (delignification) had occurred, the solution was acidified to a pH of 3.0 with H₂SO4 to neutralize phenates, is any, thus favoring their extraction in CH₂Cl₂ and ethyl ether. The obtained orange liquid was put into a flask and at the "rotavapor" under a slight vacuum at room temperature to evaporate the acetone excess so that it will not interfere with the analysis. The liquid, besides being clear and limpid, also lost its initial sweetish smell. The solution was extracted first in methylene chloride, then in ethyl ether.

The mother-liquors were evaporated to dryness, so obtaining a clear orange odorless solid. The compounds extracted in the organic phases were analyzed with the gas-mass (GC-MS) and with a gas-chromatograph interfaced with an infrared spectrophotometer (GC-FT-IR). From the mass spectrometry data for each chromatographically separated compound as well as from the GC-FT-IR spectra, it is apparent that the sulphonated lignin was oxidized and broken in three principal compounds, namely a derivative of the coniferylic alcohol, 3,4-di-hydroxy-benzaldehyde and p-hydroxy-3-metoxy-benzaldehyde, which represent the basic monomer of lignin. Other oxidation products present in minor amounts were detected. An analysis on the U.V. spectrometer, revealed that the solid obtained from the evaporation of mother liquors is similar to the starting lignin. However, the solid shows a Carbonium-13 NMR spectrum different from the starting one. In fact, signals at 180 ppm and 160 ppm are present, which account for the presence of carboxylic functions, which indicate a further oxidation, with respect to the starting compound. On the basis of the organic material amount extracted in CH₂Cl₂ and in ethyl ether with respect to the material amount remaining in the aqueous phase, it was possible to calculate that the delignification was performed for 40-45%. From an U.V. alalysis, it was inferable that after the treatment the reaction mixture was 85% clearer than before the treatment.

### EXAMPLE 2

The procedure of Example 1 was repeated, except that a weight ratio potassium caroate/sulphonated lignin of 3:1 was employed. The obtained results are the same as those obtained in Example 1.

### EXAMPLE 3

The procedure of Example 1 was repeated, except that the temperature was raised from 10°C to 22°C and the reactor jacket was omitted. The obtained results are the same as those obtained in Example 1.

### EXAMPLE 4

Following the procedure of Example 1, 40.6 ml of separated dimethyl-dioxirane 0.067M were employed to oxidize 1.5 g of sulphonated lignin. The separated dimethyl-dioxirane was prepared by reacting potassium caroate and acetone in a molar ratio equal to 5:1, at 0°C for 1 hour. The dioxirane was isolated by filtering the reaction mixture and distillating it. A fairly good delignification was achieved.

### EXAMPLE 5

Following the procedure of Example 1, 3.1 ml of separated trifluoromethyl-methyl-dioxirane 0.33M were employed to oxidize 0.6 g of sulphonated lignin. The separated dioxirane was prepared by reacting potassium caroate and trifluoroacetone in a molar ratio equal to 5:1, at -79°C under a slight nitrogen flow for 8 minutes. The dioxirane was directly distilled under vacuum and employed. A fairly good delignification was achieved.

## Claims

1. A process for the degradation of lignin wherein a lignin or a derivative thereof is treated in an aqueous medium with at least a dioxirane of the following formula: 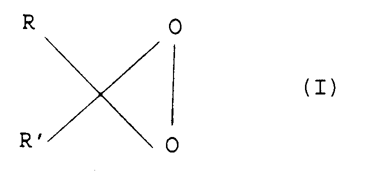 wherein R and R' are a lower alkyl or aryl groups, optionally fluoro-substituted.

2. The process according to claim 1, wherein the dioxirane is selected from the group consisting of dimethyl-dioxirane, methyl-trifluoromethyl-dioxirane and methyl-phenyl-dioxirane.

3. The process according to claim 1, wherein the dioxirane is prepared in situ starting from the corresponding ketone and from potassium caroate.

4. The process according to claim 1, wherein it is operated at a temperature ranging from 4°C to 25°C and at atmospheric pressure.

5. The process according to claim 1, wherein the pH ranges from about 6.5 to 7.5.

6. The process according to claim 5, wherein it is operated in the presence of a buffer system ranging from 0.05 to 0.2M at a substantially neutral pH.

7. The process according to claim 1, wherein the ratio (dioxirane moles):(lignin substrate grams) ranges from 1:1 to 6:1.

8. The process according to claim 1, wherein the weight ratio caroate:lignin substrate ranges from 1:1 to 50:1.

9. The process according to claim 8, wherein the weight ratio caroate:lignin substrate ranges from 2:1 to 15:1.

10. The process according to claim 8, wherein the weight ratio ketone:lignin substrate ranges from 1:1 to 10:1.

11. The process according to claim 10, wherein the weight ratio ketone:lignin substrate may range from 1:1 to 7:1.

12. The process according to claim 1, wherein the lignin substrate consists of sulphonated lignin obtained from the wooden material in a paper production process.

13. The process according to claim 1, wherein the lignin substrate consists of the waste waters of a process for the production of paper.

14. The process according to claim 1, wherein the lignin substrate is selected from wooden materials and materials of partial degradation of lignin.

15. The process according to claim 1, which is conducted continuously.
